# EUROPÄISCHE PATENTSCHRIFT

(11) **EP 1 808 321 B1**
(45) Veröffentlichungstag und Bekanntmachung des Hinweises auf die Patenterteilung: **08.04.2009**
(21) Anmeldenummer: 07003268.5
(22) Anmeldetag: 26.01.2001
(51) Int. Cl.: B60J 7/20

(54) **Cabriolet-Fahrzeug mit einem unterhalb eines Verdeckkastendeckels ablegbaren Verdeck**
Convertible vehicle with a cover storable underneath a cover box lid
Véhicule cabriolet doté d'une capote pouvant se replier sous le couvre-capote

(30) Priorität: 10.03.2000 DE 20004535 U
(43) Veröffentlichungstag der Anmeldung: 18.07.2007
(62) Teilanmeldung aus: 01101766.2
(73) Patentinhaber: Wilhelm Karmann GmbH, 49084 Osnabrück (DE)
(72) Erfinder: Plassmeyer, Jörg, 49196 Bad Laer (DE)

(56) Entgegenhaltungen:
- EP-A1- 0 074 880
- EP-A2- 0 347 859
- DE-U1- 29 715 308
- US-A- 2 185 581
- US-A- 4 854 634

## Beschreibung

Die Erfindung betrifft ein Cabriolet-Fahrzeug mit einem unterhalb eines Verdeckkastendeckels ablegbaren Verdeck, wobei der Verdeckkastendeckel bei Öffnung einen spitzen Winkel mit der Fahrtrichtung einschließt, nach dem Oberbegriff des Anspruchs 1.

Es ist bekannt, als Antriebsorgan zur Öffnung eines derartigen Verdeckkastendeckels einen oder mehrere Hydraulikzylinder vorzusehen, die zylinderseitig schwenkbar an der Karosserie und kolbenstangenseitig ebenfalls schwenkbar am Verdeckkastendeckel gelagert sind.

Dabei fährt die Kolbenstange zur Öffnung des Verdeckkastendeckels aus und drückt dadurch Teile eines Gestänges um eine karosseriefeste Anlenkung nach oben, so daß sich dieses Gestänge, das mit dem Verdeckkastendeckel verbunden ist, aufstellt und dabei den Verdeckkastendeckel mit aufschwenkt.

Die EP 0 347 859 A2 zeigt einen Verdeckkastendeckel, der durch einen nahezu senkrecht stehenden Kraftvermittler unterhalb dieses Verdeckkastendeckels nach oben aufgedrückt werden kann. Der Kraftvermittler ist dabei von einem relativ weit oben in der Karosserie liegenden Antrieb beaufschlagbar, so daß der Antrieb in einem Bereich liegt, in dem u. U. die Karosserie verjüngt und damit nicht mehr die volle Breite zur Verfügung steht.

Der Erfindung liegt das Problem zugrunde, ein Cabriolet-Fahrzeug zu schaffen, das einen verbesserten Öffnungsmechanismus für einen Verdeckkastendeckel aufweist.

Die Erfindung löst dieses Problem mit den Merkmalen des Anspruchs 1. Vorteilhafte Ausgestaltungen sind in den Ansprüchen 2 bis 8 angegeben.

Durch die erfindungsgemäße Anordnung kann das Antriebsorgan in einer tiefen Lage in der Karosserie gehalten sein. Der Angriffspunkt der Kolbenstange kann unterhalb der karosserieseitigen Anlenkung des Gestänges für den Verdeckkastendeckel liegen.

Wenn ein in Fahrzeuglängsrichtung ein- und ausfahrbarer Hydraulikzylinder Verwendung findet, ist eine sehr platzsparende und hinsichtlich der Herstellungskosten günstige Lösung erreicht.

Besonders vorteilhaft ist das Gestänge mit einem Zwischengelenk versehen, wodurch im eingefalteten Zustand der Raumbedarf des Gestänges minimiert ist. Dieses kann parallel zu beispielsweise einem Hydraulikzylinder eingefaltet liegen und in etwa die gleiche Längserstreckung wie der Hydraulikzylinder aufweisen. Es verbleibt dann eine maximale Nutzungsmöglichkeit des Kofferraums und insbesondere des Verdeckaufnahmeraums.

Weitere Vorteile und Einzelheiten ergeben sich aus einem in der Zeichnung dargestellten Ausführungsbeispiel des Gegenstandes der Erfindung. In der Zeichnung zeigt:

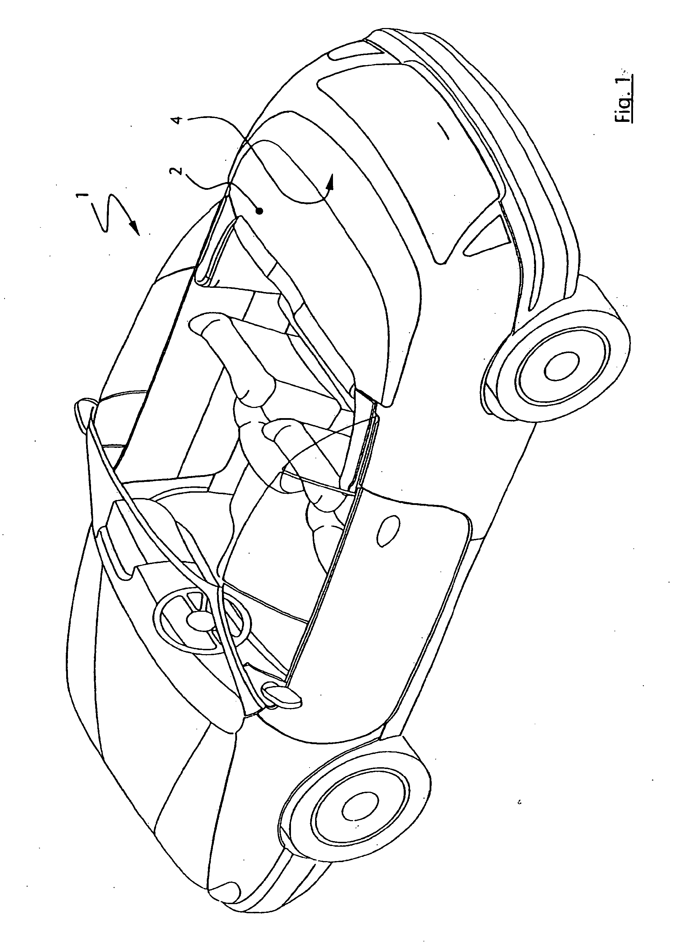

- Fig. 1: eine perspektivische Ansicht eines erfindungsgemäßen Cabriolet-Fahrzeugs,

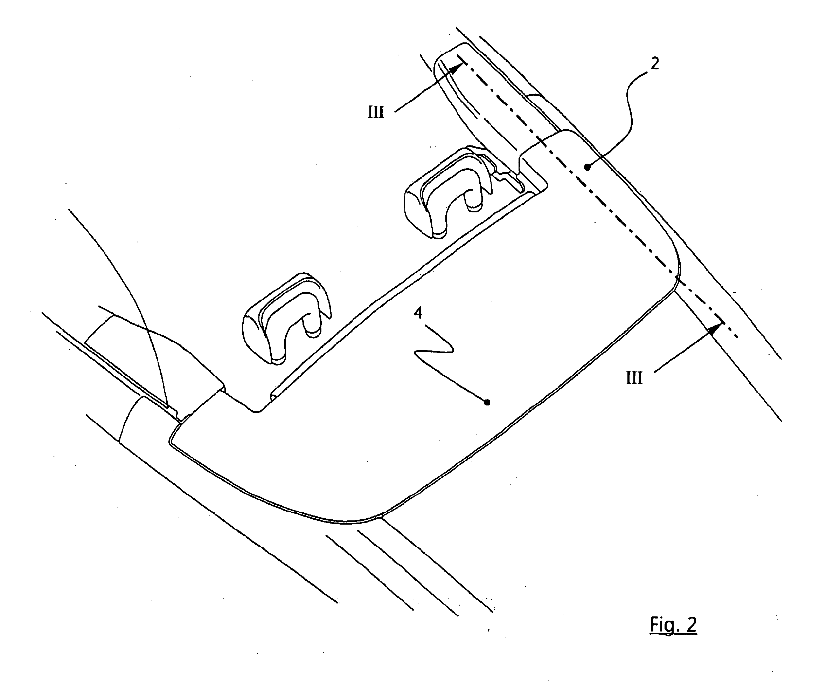

- Fig. 2: den Heckbereich eines derartigen Cabriolet-Fahrzeugs in schematischer Draufsicht bei geöffnetem Verdeck,
- Fig. 3: einen Schnitt etwa entlang der Linie III-III in Fig. 2, jedoch bei geöffnetem Verdeckkastendeckel,
- Fig. 4: eine ähnliche Ansicht wie Fig. 3, jedoch bei geschlossenem Verdeckkastendeckel,

Das Cabriolet-Fahrzeug 1 weist einen starren Verdeckkastendeckel 2 auf, der zur Abdeckung eines Verdeckaufnahmeraums 3 vorgesehen ist. Der Verdeckkastendeckel 2 kann beispielsweise aus Kunststoff oder auch metallischen Blechen, eventuell im Verbund mit Schaumwerkstoffen, bestehen. An seinem rückseitigen Bereich 4 ist der Verdeckkastendeckel 2 über ein Schwenklager 5 an der Fahrzeugkarosserie festgelegt, wobei der Verdeckkastendeckel 2 bei Öffnung einen spitzen Winkel α mit der Fahrtrichtung F einschließt Das Schwenklager 5 kann beispielsweise zwei schwanenhalsartige Scharnierteile umfassen. Auch andere Ausbildungen einer Schwenklagerung sind möglich, etwa ein in einer Fahrzeuglängsmittelebene liegendes Einzelscharnier oder mehrere über die Fahrzeugbreite verteilte Scharnierteile.

Zum Aufschwenken des an seinem rückwärtigen Bereich 4 angeschlagenen Verdeckkastendeckels 2 sind im Ausführungsbeispiel zwei seitliche Antriebsorgane 7 vorgesehen, die an einem abseits des Schwenklagers 5 gelegenen und diesem bei geschlossenem Verdeckkastendeckel 2 in Fahrtrichtung F vorgeordneten Bereich 8 angreifen. Durch die Beabstandung des Angriffspunktes 8 gegenüber dem Schwenklager 5 ergibt sich ein sehr günstiger Hebelarm, so daß nur ein geringer Kraftaufwand zum Öffnen des Verdeckkastendeckels 2 erforderlich ist.

Zur Kraftvermittlung zwischen der Kolbenstange 11 und dem Angriffspunkt 8 an dem Verdeckkastendeckel 2 ist ein etwa mittig mit einem Gelenk 110 versehenes Gestänge 109 vorgesehen. Das Gestänge 109 ist insgesamt an einer Drehachse 112 karosseriefest gehalten. Beabstandet zu der Drehachse 112 liegt die Angriffsachse 113 der Kolbenstange 11 an dem Gestänge 109, mittels deren das Auf- oder Zuschwenken des Verdeckkastendeckels 2 bewirkbar ist. Durch den Abstand der Angriffsachse 113 gegenüber der karosseriefesten Schwenkachse 112 des Gestänges 9 ergibt sich ein Hebel h für das Antriebsorgan 7. Die Hydraulikzylinder 7 sind zumindest einenends über eine karosseriefeste Halterung an dem Cabriolet-Fahrzeug 1 festgelegt.

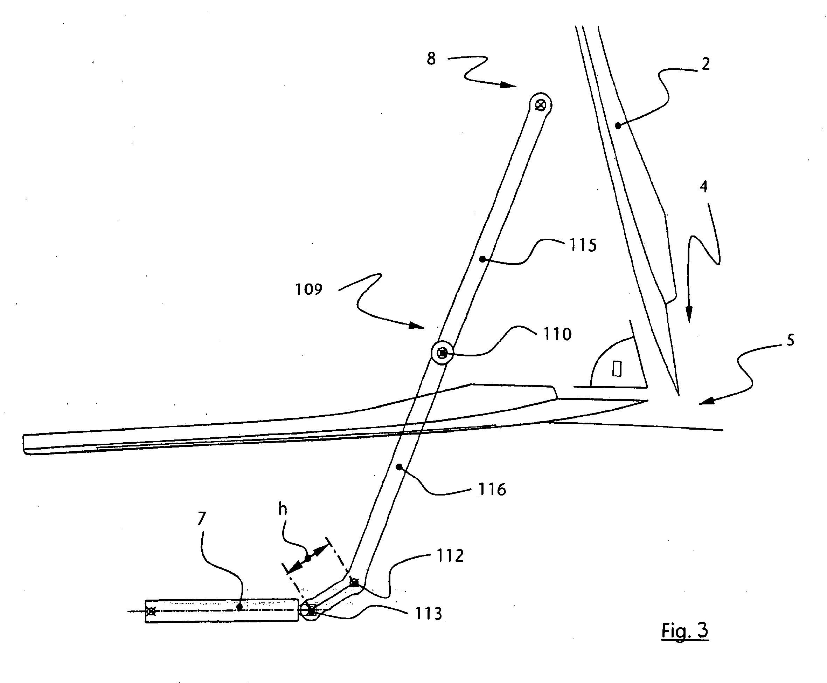

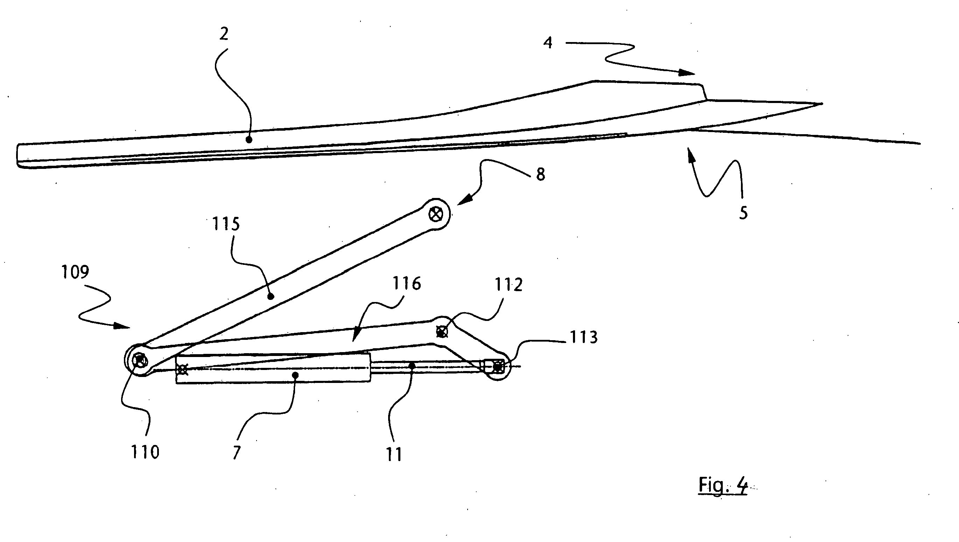

Gemäß den Figuren 7 und 8 befindet sich bei geschlossenem Verdeckkastendeckel 2 (Fig. 4) die Angriffsachse 113 heckwärts und unterhalb der karosseriefesten Drehachse 112. Der Hydraulikzylinder 7 steht dadurch, daß die karosseriefeste Anlenkung 112 dem Angriffspunkt 113 der Kolbenstange 11 in Fahrtrichtung F vorgeordnet ist, dabei in ausgefahrener Position. Zum Öffnen des Verdeckkastendeckels 2 wird dann der Kolben eingefahren und damit eine Zugkraft auf die Anlenkachse 113 ausgeübt, die zu einem Drehmoment um die karosseriefeste Schwenkachse 112 führt. Mithin wird das untere Gestängeteil 116 aufwärts geschwenkt. Da die Anlenkung 8 an dem Verdeckkastendeckel 2 ortsfest ist, erfolgt ein zwangsweises Auseinanderfalten eines zwischengelenks 110, so daß sich die in Fig. 3 gezeigte Offenstellung mit nahezu parallel ausgerichteten Gestängeteilen 115,116 ergibt. Dadurch wird auch eine Aufstellung des oberen Gestängeteils 115 bewirkt.

Mit der bei geschlossenem Verdeckkastendeckel ausgefahrenen Stellung der Kolbenstangen 11 und der Angriffsachsen 113 unterhalb der karosseriefesten Schwenkachsen 112 können die Antriebsorgane 7 sehr tief und raumoptimiert in der Karosserie gehalten sein.

Die Kolbenstange 11 ist dabei in Fahrzeuglängsrichtung ein-und ausfahrbar. Die raumsparende Anordnung (Fig. 4) der Gestängeteile 115,116 und der geringe Hubweg des Hydraulikzylinders 7 mit nur einem geringen erforderlichen Ölvolumen sind dabei verwirklicht. Die Gestängeteile 115, 116 sind selbst relativ kurz und kaum länger als die Längserstreckung des Hydraulikzylinders 7.

Das Ölvolumen ist durch den kurzen Hubweg und die unbewegten, ohne Übermaß ausgeführten Zuleitungen gering. Gleichzeitig ist der Angriffspunkt 8 auch gegenüber dem Schwenklager 5 beabstandet, woraus sich ein günstiger Hebelarm ergibt, so daß auch die erforderliche Kraft zum Öffnen des Verdeckkastendeckels 2 gering ist.

Mit einer kugelgelenkigen Ausbildung der Lagerungen 12,112 des Gestänges 9,109 an der Karosserie sowie 8 des Gestänges 9,109 an dem Verdeckkastendeckel 2 lassen sich auch Bewegungen ermöglichen, bei denen die Gestängeteile 115,116 eine dreidimensionale Bewegungsbahn beschreiben und neben der reinen Schwenkbewegung auch eine Bewegungskomponente quer zum Fahrzeug aufweisen. Dieses kann unter engen räumlichen Verhältnissen in der abgelegten Stellung zu einer besonders günstigen Bewegung führen.

Die Gestängeteile 115,116 können während ihrer Öffnung einen Totpunkt überschreiten, so daß sie in Öffnungsstellung des Verdeckkastendeckels 2 (Fig. 3) an einem Anschlag gegeneinander verspannt sind und durch die Übertotpunktlage in der geöffneten Stellung auch ohne Krafteinleitung durch das Antriebsorgan 7 verbleiben. Dieses kann dann drucklos geschaltet sein.

## Patentansprüche

1. Cabriolet-Fahrzeug (1) mit einem unterhalb eines Verdeckkastendeckels (2) ablegbaren Verdeck, wobei der Verdeckkastendeckel (2) bei Öffnung einen spitzen Winkel (α) mit der Fahrtrichtung (F) einschließt und zur Unterstützung der Öffnungsbewegung zumindest ein Antriebsorgan (7) vorgesehen ist, das an einem mit Abstand zu einem Schwenklager (5) gelegenen Bereich (8) des Verdeckkastendeckels (2) angreift,
**dadurch gekennzeichnet,**
**daß** zur Kraftvermittlung ein um eine karosseriefeste Anlenkung (112) bewegliches Gestänge (9;109) zwischen dem Antriebsorgan (7) und dem dem Schwenklager (5) abgewandten Bereich des Verdeckkastendeckels (2) vorgesehen ist, wobei bei geschlossenem Verdeckkastendeckel die karosseriefeste Anlenkung (112) dem Angriffspunkt einer Kolbenstange (11) des Antriebsorgans (7) in Fahrtrichtung (F) vorgeordnet ist und sich das Antriebsorgan (7) in ausgefahrener Position befindet.

2. Cabriolet-Fahrzeug (1) nach Anspruch 1,
**dadurch gekennzeichnet,**
**daß** das Antriebsorgan (7) im wesentlichen ortsfest an der Fahrzeugkarosserie gehalten ist.

3. Cabriolet-Fahrzeug (1) nach einem der Ansprüche 1 oder 2,
**dadurch gekennzeichnet,**
**daß** das Antriebsorgan (7) im wesentlichen horizontal in der Karosserie gehalten ist.

4. Cabriolet-Fahrzeug (1) nach Anspruch 3,
**dadurch gekennzeichnet,**
**daß** das Antriebsorgan (7) einen Hydraulikzylinder ausgebildet, dessen Kolbenstange (11) in Fahrzeuglängsrichtung ein- und ausfahrbar ist.

5. Cabriolet-Fahrzeug (1) nach einem der Ansprüche 1 bis 4,
**dadurch gekennzeichnet,**
**daß** das Gestänge (109) in gegenüber dem Schwenklager (5) in Fahrtrichtung (F) vorgeordneter Position karosseriefest gelagert (112) ist und vom Lager (112) ausgehend einen Hebelarm (h) aufweist, an dem das Antriebsorgan (7) zur Bewegung des Gestänges (109) angreift.

6. Cabriolet-Fahrzeug (1) nach Anspruch 5,
**dadurch gekennzeichnet,**
**daß** das Gestänge (109) zumindest ein Zwischengelenk (110) aufweist, das durch Kraft des Antriebsorgans (7) zwangsweise ein- oder ausfaltbar ist.

7. Cabriolet-Fahrzeug (1) nach einem der Ansprüche 5 oder 6,
**dadurch gekennzeichnet,**
**daß** das Gestänge (109) in geschlossener Stellung des Verdeckkastendeckels (2) in eingefalteter Stellung und im wesentlichen parallel zu dem Antriebsorgan (7) gehalten ist, wobei die Längserstreckung der Gestängeteile (115;116) im wesentlichen der Längserstreckung des Antriebsorgans (7) entspricht.

8. Cabriolet-Fahrzeug (1) nach einem der Ansprüche 1 bis 7,
**dadurch gekennzeichnet,**
**daß** das Lager (112) sowie ein Anlenkpunkt (8), an dem das Gestänge (109) an dem Verdeckkastendeckel (2) angreift, als Kugelgelenke ausgebildet sind.

## Claims

1. A cabriolet vehicle (1) with a folding top able to be stored under a folding-top compartment cover (2), wherein the folding-top compartment cover (2), upon opening, forms an acute angle (α) with the direction of travel (F) and, to support the opening movement, at least one drive member (7) is provided, which acts on an area (8) of the folding-top compartment cover (2) which is situated spaced apart from a hinge bearing (5),
**characterised in that**
in order to communicate the force, a rod assembly (9; 109) which is movable about a pivot point (112) attached to the car body is provided between the drive member (7) and the area of the folding-top compartment cover (2) facing away from the hinge bearing (5), wherein, when the folding-top compartment cover is closed, the pivot point (112) attached to the car body is arranged, in the direction of travel (F), in front of the point of action of a piston rod (11) of the drive member (7) and the drive member (7) is in the extended position.

2. The cabriolet vehicle (1) according to claim 1,
**characterised in that**
the drive member (7) is held in a substantially stationary manner at the vehicle body.

3. The cabriolet vehicle (1) according to one of claims 1 or 2,
**characterised in that**
the drive member (7) is held in a substantially horizontal manner in the car body.

4. The cabriolet vehicle (1) according to claim 3,
**characterised in that**
the drive member (7) forms a hydraulic cylinder, of which the piston rod (11) is extendable and retractable in the longitudinal direction of the vehicle.

5. The cabriolet vehicle (1) according to one of claims 1 to 4,
**characterised in that**
the rod assembly (109) is borne (112) attached to the car body in a position arranged, with respect to the hinge bearing (5), in front in the direction of travel (F) and starting from the bearing (112) has a lever arm (h) upon which the drive member (7) acts in order to move the rod assembly (109).

6. The cabriolet vehicle (1) according to claim 5,
**characterised in that**
the rod assembly (109) has at least one intermediate hinge (110) that can be folded in or folded out by force by means of the force of the drive member (7).

7. The cabriolet vehicle (1) according to one of claims 5 or 6,
**characterised in that**
the rod assembly (109), in the closed state of the folding-top compartment cover (2), is held in the folded-in state and substantially parallel to the drive member (7), wherein the longitudinal extension of the rod assembly parts (115; 116) substantially corresponds to the longitudinal extension of the drive member (7).

8. The cabriolet vehicle (1) according to one of claims 1 to 7,
**characterised in that**
the bearing (112) as well as a pivot point (8), at which the rod assembly (109) acts on the folding-top compartment cover (2), are configured as ball-and-socket joints.

## Revendications

1. Véhicule cabriolet (1) comprenant une capote pouvant être déposée au-dessous d'un couvercle de logement de capote (2), le couvercle de logement de capote (2) formant, lors de l'ouverture, un angle aigu (α) avec le sens de la marche (F) et, pour le support du mouvement d'ouverture, au moins un organe d'entraînement (7) qui s'applique sur une zone (8) du couvercle de logement de capote (2), étant prévu, ladite zone étant située à distance d'un palier pivotant (5),
**caractérisé en ce que,**
pour la transmission de force, il est prévu une tringlerie de toit (9 ; 109) mobile autour d'une articulation (112) fixée sur la carrosserie entre l'organe d'entraînement (7) et la zone, opposée au palier pivotant (5), du couvercle de logement de capote (2), lorsque le couvercle de logement de capote est fermé, l'articulation (112) fixée sur la carrosserie étant disposée en amont du point d'application d'une tige de piston (11) de l'organe d'entraînement (7) dans le sens de la marche (F) et l'organe d'entraînement (7) se trouvant en position sortie.

2. Véhicule cabriolet (1) selon la revendication 1,
**caractérisé en ce que**
l'organe d'entraînement (7) est maintenu substantiellement de manière fixe sur la carrosserie du véhicule.

3. Véhicule cabriolet (1) selon l'une des revendications 1 ou 2,
**caractérisé en ce que**
l'organe d'entraînement (7) est maintenu substantiellement à l'horizontale dans la carrosserie.

4. Véhicule cabriolet (1) selon la revendication 3,
**caractérisé en ce que**
l'organe d'entraînement (7) forme un cylindre hydraulique dont la tige de piston (11) peut sortir et rentrer dans le sens longitudinal du véhicule.

5. Véhicule cabriolet (1) selon l'une des revendications 1 à 4,
**caractérisé en ce que**
la tringlerie (109) est montée de façon fixe sur la carrosserie dans une position disposée en amont dans le sens de la marche (F) par rapport au palier pivotant (5) et présente un bras de levier (h) sortant du support (112), l'organe d'entraînement (7) s'appliquant contre ledit bras de levier pour le déplacement de la tringlerie (109).

6. Véhicule cabriolet (1) selon la revendication 5,
**caractérisé en ce que**
la tringlerie (109) présente au moins une articulation intermédiaire (110) qui est repliable et dépliable de façon contrôlée sous l'effet de la force de l'organe d'entraînement (7).

7. Véhicule cabriolet (1) selon l'une des revendications 5 ou 6,
**caractérisé en ce que,**
lorsque le couvercle de logement de capote (2) est en position fermée, la tringlerie (109) est maintenue en position repliée et substantiellement parallèlement à l'organe d'entraînement (7), l'extension longitudinale des éléments de tringlerie (115 ; 116) correspondant substantiellement à l'extension longitudinale de l'organe d'entraînement (7).

8. Véhicule cabriolet (1) selon l'une des revendications 1 à 7,
**caractérisé en ce que**
le support (112) ainsi qu'un point d'articulation (8) contre lequel s'applique la tringlerie (109) sur le couvercle de logement de capote (2), sont réalisés en tant que joints sphériques.
